# EUROPÄISCHE PATENTANMELDUNG

(11) **EP 1 080 988 A1**
(43) Veröffentlichungstag der Anmeldung: **07.03.2001**
(21) Anmeldenummer: 99810801.3
(22) Anmeldetag: 06.09.1999
(51) Int. Cl.: B60P 1/30, B60P 3/07

(54) **Kippfahrzeug**

(71) Anmelder: Steiner, Frank, 3210 Kerzers (CH)
(72) Erfinder: Steiner, Frank, 3210 Kerzers (CH)
(74) Vertreter: Roshardt, Werner Alfred, Dipl.-Phys.

(57) **Zusammenfassung**

Ein Kippfahrzeug (10) mit einem Fahrzeugchassis (12) und einem mittels einer Kippvorrichtung (50) bezüglich des Fahrzeugchassis (12) um eine Kippachse (15) schwenkbaren Kippbehälter (20) ist mit Bewegungsmitteln versehen, welche es erlauben, die Kippachse (15) bezüglich des Fahrzeugchassis (12) wahlweise quer zur Achsrichtung zu verschieben. Durch ein wahlweises Verschieben der Kippachse (15) kann einerseits die Ausschütthöhe und/oder der Überhang der Ausschüttöffnung eines für den Schüttguttransport ausgebildeten Kippbehälters (20) reguliert werden. Andrerseits kann durch ein Verschieben der Kippachse (15) der Kippbehälter (20) in eine zum Beladen des Kippbehälters (20) und/oder zum Entladen desselben auf andere Art als mittels Kippen geeignete Lage bezüglich des Fahrzeugchassis (12) gebracht werden. Insgesamt wird durch die Erfindung ein Kippfahrzeug (10) bereitgestellt, das vielseitig verwendbar und für unterschiedliche Anwendungszwecke einsetzbar ist.

## Beschreibung

### Technisches Gebiet

Die Erfindung betrifft ein Kippfahrzeug mit einem Fahrzeugchassis und einem bezüglich des Fahrzeugchassis um eine Kippachse schwenkbaren Kippbehälter.

### Stand der Technik

Unter einem Kippbehälter ist im folgenden irgend ein für die Aufnahme von Transportgut geeigneter kippbarer Behälter zu verstehen, wie z.B. eine Mulde, ein Tank, eine Lastwagen- oder Anhängerbrücke, eine im wesentlichen ebene Transportplattform usw. Als Kippfahrzeug wird irgend ein mit einem Kippbehälter versehenes Landfahrzeug verstanden, wie z.B. ein als Einzelfahrzeug ausgebildeter Lastkraftwagen, ein aus einer Zugmaschine und einem Sattelauflieger bestehender Sattelzug, ein Fahrzeuganhänger, ein Eisenbahnwaggon usw.

Als Kippfahrzeuge ausgebildete Lastkraftwagen und/oder Sattelzüge sind in einer Vielzahl von Ausführungsformen bekannt. Sie sind insbesondere für den Transport im Bauwesen weit verbreitet, da sie ein einfaches und schnelles Auf- und Abladen der transportierten Güter ermöglichen.

Als nachteilig erweist sich, dass gebräuchliche Kippfahrzeuge aufgrund spezifischer Formen der Kippbehälter und/oder ihrer Öffnungen zum Entleeren derselben, speziellen Anordnungen der Kippbehälter auf den Fahrzeugchassis und Kippbehältermaterialien, die bloss für bestimmte Transportgüter geeignet sind, auf die Verwendung für einige wenige spezifische Anwendungen eingeschränkt sind, für welche die Kippfahrzeuge speziell konstruiert wurden. So ist es beispielsweise überhaupt nicht oder bloss umständlich möglich, mit dem gleichen Kippfahrzeug einerseits schüttgutförmiges Belagsmaterial für den Bau von Strassenbelägen und andrerseits Stückgut (z.B. in Form von Baufahrzeugen) zu transportieren. Deshalb muss eine Baufirma für verschiedene Anwendungen einen Wagenpark aus einer Vielzahl von unterschiedlichen Kippfahrzeugen besitzen und unterhalten, was ineffizient und teuer ist.

### Darstellung der Erfindung

Aufgabe der vorliegenden Erfindung ist die Angabe eines Kippfahrzeuges der eingangs genannten Art, das vielseitig für unterschiedliche Anwendungen verwendbar ist.

Die Lösung der Aufgabe ist durch die Merkmale des Anspruchs 1 definiert. Gemäss der Erfindung ist ein Kippfahrzeug mit einem Fahrzeugchassis und einem bezüglich des Fahrzeugchassis um eine Kippachse schwenkbaren Kippbehälter mit Bewegungsmitteln versehen, welche es erlauben, die Kippachse bezüglich des Fahrzeugchassis wahlweise quer zur Achsrichtung der Kippachse zu verschieben.

Gemäss der Erfindung kann die Kippachse, um welche herum der Kippbehälter mittels einer gebräuchlichen Kippvorrichtung geschwenkt bzw. gekippt werden kann, mit Hilfe der Bewegungsmittel in verschiedene Positionen gebracht bzw. verschoben und in diesen Positionen - insbesondere auch während des Kippens des Behälters - festgehalten werden. Durch eine erfindungsgemässe Verschiebung (d.h. eine translatorische Bewegung) der Kippachse quer zur Achsrichtung in eine gewünschte Position wird natürlich auch die Austrittsöffnung des Kippbehälters verschoben, durch welche hindurch beim Entladen von Transportgut mittels Kippens des Kippbehälters das Transportgut ausströmt. Somit ist es möglich, die Austrittsöffnung gemäss den jeweiligen Bedürfnissen für verschiedene Anwendungen unterschiedlich zu positionieren, indem vor dem Entleeren des Kippbehälters mittels Kippens die Kippachse entsprechend verschoben und positioniert wird. Bei einem für den Schüttguttransport vorgesehenen Behälter kann auf diese Art mittels der Bewegungsmittel die Ausschütthöhe und/oder der Überhang der Ausschüttöffnung reguliert werden.

Die Möglichkeit zur Verschiebung der Kippachse kann jedoch auch zum Beladen des Kippbehälters und/oder zum Entladen desselben auf andere Art als mittels Kippens nützlich sein. Indem die Kippachse mittels der Bewegungsmittel wahlweise in verschiedene Positionen gebracht und der Kippbehälter mittels der Kippvorrichtung in verschiedene Schwenklagen um die Kippachse in diesen Achspositionen herum geschwenkt werden kann, kann der Kippbehälter in eine Vielzahl von unterschiedlichen Lagen bezüglich des Chassis des Kippfahrzeuges bewegt werden. Auf diese Art ist es möglich, den Kippbehälter jeweils in eine zum Beladen oder zum Entladen desselben besonders günstige Lage zu bewegen.

Vorzugsweise sind die Bewegungsmittel derart ausgebildet, dass die Kippachse wahlweise in Fahrzeuglängsrichtung und/oder in Fahrzeughochrichtung bezüglich des Fahrzeugchassis verschiebbar ist. D.h., dass bei einer auf übliche Art quer zur Fahrzeuglängsrichtung und im wesentlichen horizontal angeordneten Kippachse diese parallel zu einer zur Kippachse normal stehenden Ebene verschoben werden kann. Es können Bewegungsmittel für voneinander unabhängige Verschiebungsbewegungen in Fahrzeuglängsrichtung und in Richtung der Fahrzeugvertikalen bzw. der Fahrzeughöhe vorgesehen sein. Diese können z.B. nach Art eines X-Y-Schlittens für Bewegungen mit zwei translatorischen Freiheitsgraden ausgebildet sein.

Gemäss einer bevorzugten Ausführungsform der Erfindung umfassen die Bewegungsmittel eine Schwenkeinrichtung mit wenigstens einem länglichen Verbindungsteil, das an einem seiner Längsenden um eine Schwenkachse schwenkbar am Fahrzeugchassis und an seinem anderen Längsende um die Kippachse schwenkbar am Kippbehälter angelenkt ist, um ein Verschieben der Kippachse auf einer Kreisbahn um die Schwenkachse herum zu ermöglichen. Die Kippachse kann somit auf einer Kreisbahn mit der Schwenkachse im Zentrum bezüglich des Fahrzeugchassis bewegt werden. Vorzugsweise sind die Kippachse und die Schwenkachse parallel zueinander angeordnet.

Vorzugsweise umfasst die Schwenkeinrichtung Antriebsmittel, welche es erlauben, das Verbindungsteil bezüglich des Fahrzeugchassis um die Schwenkachse herum in eine gewünschte Schwenkstellung zu schwenken. Diese Schwenkantriebsmittel umfassen vorteilhafterweise einen Motor zur motorischen Betätigung der Schwenkeinrichtung. Um das Verbindungsteil um die Schwenkachse herum zu schwenken, können die Schwenkantriebsmittel weiter einen zwischen dem Fahrzeugchassis und dem Verbindungsteil wirkenden Spindel-Mutter-Trieb, einen Antrieb mit Zahnrad und Zahnstange, einen Motor, der über ein Zahnradgetriebe auf ein fest mit der Schwenkachse verbundenes Ritzel wirkt, einen hydraulisch betätigbaren Hebelmechanismus, eine direktangetriebene Rundachse oder irgend einen anderen geeigneten Antrieb für eine Rundachse umfassen.

Weiter umfasst die Schwenkeinrichtung vorzugsweise Arretiermittel, welche es erlauben, das Verbindungsteil in einer gewünschten Schwenkstellung bezüglich des Fahrzeugchassis zu arretieren. Diese Arretiermittel können z.B. am Fahrzeugchassis angebrachte Bolzen aufweisen, welche in Bohrungen an der Schwenkachse und/oder am Verbindungsteil eingeschoben werden können.

Eine bevorzugte Ausführungsform der Erfindung mit einer ein längliches Verbindungsteil aufweisenden Schwenkeinrichtung zeichnet sich weiter dadurch aus, dass das Verbindungsteil in seiner Längsrichtung wahlweise verlängert und verkürzt werden kann, wobei es vorzugsweise jeweils in der gewünschten Länge fixiert werden kann. Zum Zwecke dieser Längenveränderung kann das Verbindungsteil teleskopisch ausgebildet sein. Indem die Länge des Verbindungsteils verstellt wird, kann die Kippachse (und somit der Kippbehälter) wahlweise bezüglich der Schwenkachse (und somit des Fahrzeugchassis) linear in Längsrichtung des Verbindungsteils verschoben werden. Es können Antriebsmittel für eine hydraulische Längenverstellung des Verbindungsteils vorgesehen sein.

Gemäss einer bevorzugten Ausführungsform der Erfindung ist die Kippachse wahlweise verschiebbar und in verschiedenen Schiebepositionen arretierbar am Kippbehälter angebracht. Dadurch werden weitere Verstellmöglichkeiten zum Verstellen der Lage des Kippbehälters bezüglich des Fahrzeugchassis geschaffen. Für diesen Zweck kann die Kippachse z.B. in einem fest an einem Schlitten angebrachten Achslager gelagert sein, wobei der Schlitten seinerseits entlang einer fest am Kippbehälter angebrachten Linearführung wahlweise verschiebbar und in verschiedenen Schiebepositionen arretierbar ist.

Gemäss einer weiteren bevorzugten Variante der Erfindung mit einer ein längliches Verbindungsteil aufweisenden Schwenkeinrichtung ist die Schwenkachse wahlweise verschiebbar und in verschiedenen Schiebepositionen arretierbar am Fahrzeugchassis angebracht. Durch diese Massnahme werden zusätzliche Verstellmöglichkeiten zum Verstellen der Lage des Kippbehälters bezüglich des Fahrzeugchassis geschaffen. Für diesen Zweck kann die Schwenkachse in einem fest an einem Schlitten angebrachten Achslager gelagert sein, wobei der Schlitten seinerseits entlang einer fest am Fahrzeugchassis angebrachten Linearführung wahlweise verschiebbar und in verschiedenen Schiebepositionen arretierbar ist.

Eine bevorzugte Ausführungsform eines erfindungsgemässen Kippfahrzeuges zeichnet sich dadurch aus, dass der Kippbehälter eine für den Transport von Schüttgut geeignete Mulde ist, deren Muldenboden zum Befahren durch einen Lastkraftwagen ausgebildet ist, damit der Lastkraftwagen in der Mulde aufgenommen und durch das Kippfahrzeug transportiert werden kann. Mittels der Mulde kann somit einerseits auf für Muldenkipper gebräuchliche Art Schüttgut transportiert werden. Andrerseits kann bei Bedarf mittels der Mulde jedoch auch ein Lastkraftwagen transportiert werden. Zum Verladen des Lastkraftwagens kann die Mulde mittels der Kippvorrichtung und/oder der Bewegungsmittel in eine zum Verladen des Lastkraftwagens geeignete Lage bezüglich des Kippfahrzeugchassis gebracht werden. Anschliessend kann der Lastkraftwagen in die Mulde gefahren und auf dem Kippfahrzeug verladen werden, worauf der Lastkraftwagen mittels des Kippfahrzeuges transportiert werden kann.

Vorzugsweise ist die für den Schüttgut- und Fahrzeugtransport ausgebildete Mulde weiter mit Mitteln zum wahlweisen Verlängern des Muldenbodens versehen. Diese Verlängerungsmittel erlauben es, den Muldenboden bei Bedarf zu verlängern, um eine längere Transportplattform (z.B. für den Transport eines Fahrzeuges) zu schaffen. Für die Transportplattformverlängerung kann z.B. die Heckklappe der Mulde verwendet werden, entweder als alleinige Transportplattformverlängerung oder in Verbindung mit weiteren Transportplattformverlängerungsmitteln.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein Kippfahrzeug gemäss einer bevorzugten Ausführungsform der Erfindung in einer vereinfachten Seitenansicht, mit dem Kippbehälter in einer ersten Lage bezüglich des Fahrzeugchassis;
- Fig. 2: das Kippfahrzeug aus Fig. 1 in einer vereinfachten Seitenansicht, mit dem Kippbehälter in einer zweiten Lage bezüglich des Fahrzeugchassis;
- Fig. 3: das Kippfahrzeug aus Fig. 1 in einer vereinfachten Seitenansicht, mit dem Kippbehälter in einer dritten Lage bezüglich des Fahrzeugchassis.

Grundsätzlich sind in den Figuren gleiche Teile mit gleichen Bezugszeichen versehen.

### Wege zur Ausführung der Erfindung

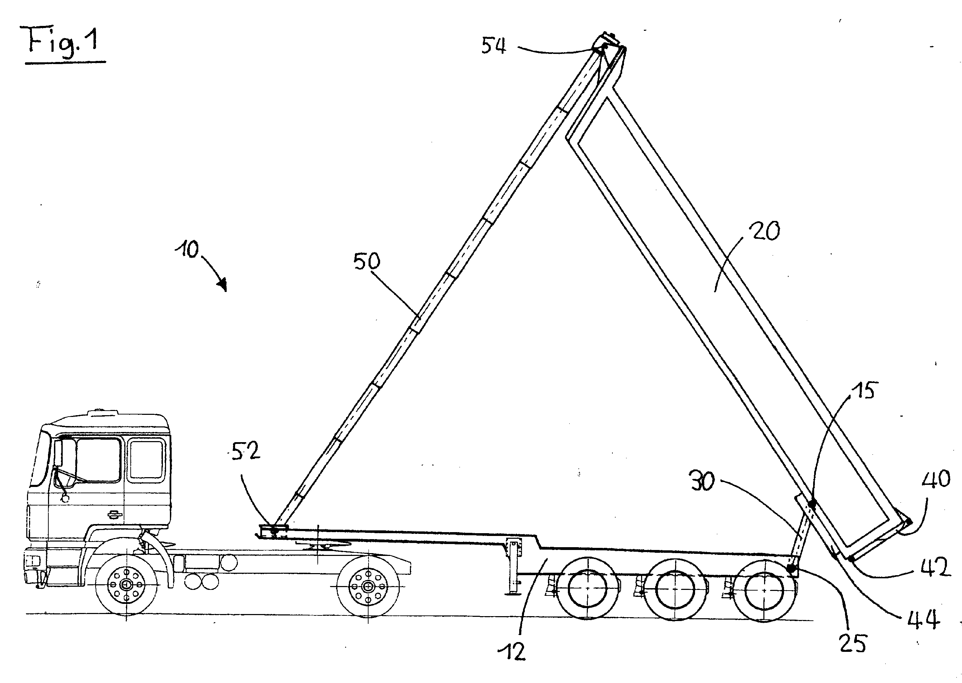

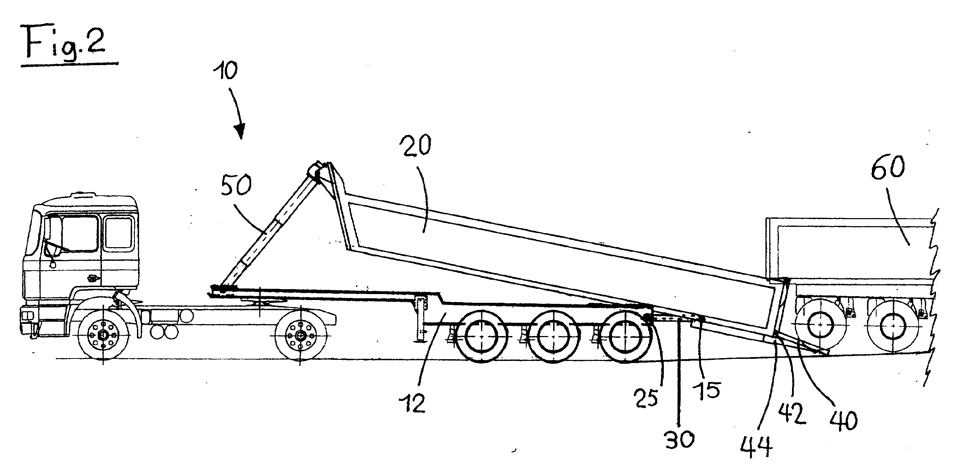

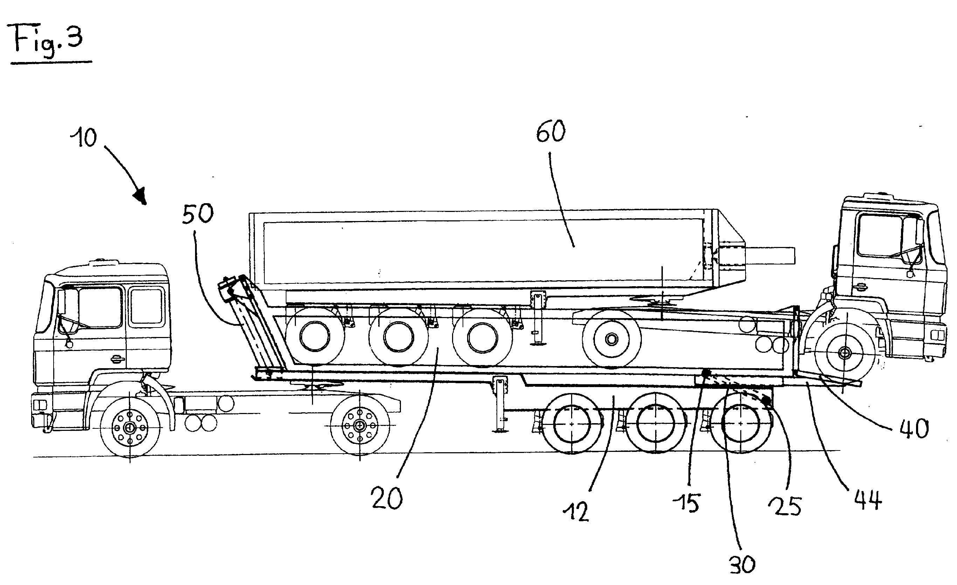

In Fig. 1 ist ein Kippfahrzeug 10 gemäss einer bevorzugten Ausführungsform der Erfindung in einer vereinfachten Seitenansicht dargestellt, wobei der Kippbehälter 20 des Kippfahrzeuges 10 in einer ersten, zum Ausschütten von Schüttgut aus dem Kippbehälter 20 geeigneten Lage bezüglich des Fahrzeugchassis 12 des Kippfahrzeuges 10 angeordnet ist. Bei der Darstellung in Fig. 2 ist dieses Kippfahrzeug 10 mit dem Kippbehälter 20 in einer Lage dargestellt, die zum Verladen eines (andeutungsweise dargestellten) Lastkraftwagens 60 geeignet ist. In Fig. 3 ist das Kippfahrzeug 10 mit dem Kippbehälter 20 in seiner Transportlage und dem auf den Kippbehälter 20 verladenen Lastkraftwagen 60 dargestellt, wobei die Seitenwände des Kippbehälters 20 in an sich nicht zutreffender Art als durchsichtig dargestellt sind, um die Anordnung des transportierten Lastkraftwagens 60 auf dem Kippbehälter 20 zu verdeutlichen.

Das in den Figuren 1 bis 3 dargestellte Kippfahrzeug 10 ist ein als Sattelzug ausgebildeter Lastkraftwagen 10. Er umfasst eine Zugmaschine (auch Zugfahrzeug, Sattelschlepper oder Traktor genannt) und einen Anhänger in Form eines Sattelaufliegers.

Auf dem Anhängerchassis 12 ist ein Kippbehälter 20 in Form einer für den Transport von Schüttgut ausgebildeten Kippmulde 20 angeordnet. Zum Zwecke des Kippens ist die Kippmulde 20 um eine im wesentlichen horizontal und quer zur Anhängerlängsrichtung angeordnete Kippachse 15 herum schwenkbar an einem mit dem Anhängerchassis 12 verbundenen Verbindungsteil 30 angelenkt. Weiter ist zum Zwecke des Kippens auf dem Anhänger eine Kippvorrichtung mit einem hydraulisch betätigbaren Teleskopzylinder 50 angeordnet. Ein Längsende dieses Teleskopzylinders 50 ist in einem vorderen Bereich des Anhängers um eine zur Kippachse 15 parallele erste Verbindungsachse 52 herum schwenkbar am Anhängerchassis 12 angelenkt, während das andere Längsende des Teleskopzylinders 50 an der Frontwand der Kippmulde 20 um eine zur Kippachse 15 parallele zweite Verbindungsachse 54 herum schwenkbar angelenkt ist. Durch eine Betätigung des Teleskopzylinders 50 kann die Kippmulde 20 um die Kippachse 15 herum geschwenkt werden, um z.B. in der in Fig. 1 dargestellten Stellung das Schüttgut (nicht dargestellt) aus der Kippmulde 20 zu entleeren.

Bei der in den Figuren 1 bis 3 dargestellten Ausführungsform der Erfindung ist die Kippmulde 20 in einem hinteren Bereich des Muldenbodens um die Kippachse 15 herum schwenkbar an einem Längsende eines plattenförmigen, länglichen Verbindungsteils 30 angelenkt. Dieses Verbindungsteil 30 ist an seinem anderen Längsende um eine Schwenkachse 25 herum schwenkbar nahe beim hinteren Ende des Anhängerchassis 12 an diesem angelenkt. Die Schwenkachse 25 ist parallel zur Kippachse 15, d.h. im wesentlichen horizontal und quer zur Anhängerlängsrichtung am Anhängerchassis 12 angeordnet.

Bei der in den Figuren 1 bis 3 dargestellten Ausführungsform der Erfindung ist das Verbindungsteil 30 im wesentlichen als einstückige, längliche Platte 30 mit einer fixen Länge ausgebildet. Bei anderen Varianten der Erfindung können anstelle eines einzigen Verbindungsteils mehrere, z.B. rohrförmig ausgebildete Verbindungsteile vorgesehen sein, die um eine oder mehrere zueinander koaxial angeordnete Kippachsen herum schwenkbar am Kippbehälter und um eine oder mehrere zueinander koaxial angeordnete Schwenkachsen herum schwenkbar am Anhängerchassis angelenkt sind. Zudem können bei anderen Erfindungsvarianten das eine oder die mehreren Verbindungsteile in ihrer Länge verstellbar ausgebildet sein, um durch eine Längenverstellung die Kippachse (und somit den Kippbehälter) wahlweise bezüglich der Schwenkachse (und somit des Fahrzeugchassis) linear in Längsrichtung des bzw. der Verbindungsteile verschieben zu können.

Das die Kippmulde 20 mit dem Anhängerchassis 12 verbindende Verbindungsteil 30 ist Teil einer Schwenkeinrichtung, die zum wahlweisen Verschieben der Kippachse 15 bezüglich des Anhängerchassis 12 quer zur Achsrichtung der Kippachse 15 dient. Die Schwenkeinrichtung umfasst weiter Antriebsmittel (nicht dargestellt), welche es erlauben, das Verbindungsteil 30 bezüglich des Fahrzeugchassis 12 um die Schwenkachse 25 herum in eine gewünschte Schwenkstellung zu schwenken und in dieser Schwenkstellung zu arretieren. Bei dem in den Figuren dargestellten Ausführungsbeispiel ist das Verbindungsteil 30 drehfest mit der Schwenkachse 25 verbunden und die Antriebsmittel umfassen eine an der Schwenkachse 25 angebrachte Rasterscheibe, die mittels einer hydraulisch betätigbaren Schubstange schrittweise jeweils von einer Raststellung zur nächsten bewegt werden kann, um die Schwenkachse 25 jeweils um einen bestimmten Winkelschritt zu schwenken. Es sind jedoch auch andere geeignete Mittel für den Schwenkantrieb des Verbindungsteils 30 möglich.

In der Darstellung der Fig. 1 befindet sich die Kippmulde 20 in einer Stellung zum Entleeren von Schüttgut. Das Verbindungsteil 30 ist bezüglich Anhängerchassis 12 nach oben und etwas nach hinten geschwenkt. Durch die Einstellung der Schwenkstellung des Verbindungsteils 30 bezüglich der Schwenkachse 25 kann die Position der Kippachse 15 bezüglich des Anhängerchassis 12 eingestellt werden. Dadurch kann die Ausschütthöhe sowie der Überhang der Austrittsöffnung beim Ausschütten des Schüttguts reguliert werden. Der eigentliche Kippvorgang zum Entleeren des Schüttguts wird durch eine Betätigung des Teleskopzylinders 50 ausgeführt, wobei die Kippmulde 20 um die Kippachse 15 herum geschwenkt wird.

Der Boden der Kippmulde 20 des in den Figuren 1 bis 3 dargestellten Kippfahrzeuges ist zum Befahren durch einen Lastkraftwagen 60 ausgebildet. Um den zu transportierenden Lastkraftwagen 60 in die Kippmulde 20 zu verladen, wird das Verbindungsteil 30 der Schwenkeinrichtung in die in Fig. 2 dargestellte Stellung um die Schwenkachse 25 herum nach hinten geschwenkt, so dass sich die Kippachse 15 in ihrer hinterstmöglichen Position befindet. Danach werden zwei Stützbalken 44, die im hinteren Bereich unterhalb des Muldenbodens angeordnet sind, in Richtung des Muldenbodens über das hintere Ende des Muldenbodens hinaus ausgezogen und die Heckklappe 40 der Mulde 20 um ein Scharnier 42 herum, mittels dem die Heckklappe 40 an ihrem unteren Ende am Muldenboden angelenkt ist, nach aussen geklappt, so dass sie auf den beiden Stützbalken 44 aufliegt. Die Heckklappe 40 dient nun in Verbindung mit den beiden Stützbalken 44 als Plattformverlängerung für die Aufnahme des in die Kippmulde 20 zu verladenden Lastkraftwagens 60 und als Auffahrrampe, über welche der Lastkraftwagen 60 in die Kippmulde 20 hinein fahren kann.

Nach der Installation der Auffahrrampe wird die Kippmulde 20 mittels des Teleskopzylinders 50 der Kippvorrichtung soweit angehoben und um die Kippachse 15 herum geschwenkt, bis die Auffahrrampe bzw. die Plattformverlängerung den Boden berührt. In dieser in Fig. 2 dargestellten Lage der Kippmulde 20 kann nun der zu verladende Lastkraftwagen 60 in die Kippmulde 20 hinein fahren, wobei aufgrund der nach hinten verschobenen Kippachse 15 bloss eine geringe Steigung der Auffahrrampe und des als Transportplattform dienenden Muldenbodens überwunden werden muss.

Anschliessend wird die Kippmulde 20 mittels der Schwenkeinrichtung und der Kippvorrichtung 50 wieder nach vorne bewegt und auf das Anhängerchassis 12 abgesenkt, wobei das Verbindungsteil 30 der Schwenkeinrichtung nach vorne geschwenkt wird, so dass sich die Kippachse 15 in ihrer vorderstmöglichen Position befindet, bis sie die in Fig. 3 dargestellte Transportlage erreicht hat.

Zusammenfassend ist festzustellen, dass durch die Erfindung ein Kippfahrzeug bereitgestellt wird, das vielseitig verwendbar und für unterschiedliche Anwendungszwecke einsetzbar ist.

## Patentansprüche

1. Kippfahrzeug (10) mit einem Fahrzeugchassis (12) und einem mittels einer Kippvorrichtung (50) bezüglich des Fahrzeugchassis (12) um eine Kippachse (15) schwenkbaren Kippbehälter (20), gekennzeichnet durch Bewegungsmittel, welche es erlauben, die Kippachse (15) bezüglich des Fahrzeugchassis (12) wahlweise quer zur Achsrichtung zu verschieben.

2. Kippfahrzeug (10) nach Anspruch 1, gekennzeichnet durch die Ausbildung der Bewegungsmittel derart, dass die Kippachse (15) wahlweise in Fahrzeuglängsrichtung und/oder in Fahrzeughochrichtung bezüglich des Fahrzeugchassis (12) verschiebbar ist.

3. Kippfahrzeug (10) nach Anspruch 2, dadurch gekennzeichnet, dass die Bewegungsmittel eine Schwenkeinrichtung umfassen mit wenigstens einem länglichen Verbindungsteil (30), das an einem Längsende um eine Schwenkachse (25) schwenkbar am Fahrzeugchassis (12) und am anderen Längsende um die Kippachse (15) schwenkbar am Kippbehälter (20) angelenkt ist, um ein Verschieben der Kippachse (15) auf einer Kreisbahn um die Schwenkachse (25) herum zu ermöglichen.

4. Kippfahrzeug (10) nach Anspruch 3, dadurch gekennzeichnet, dass die Schwenkeinrichtung Schwenkantriebsmittel umfasst, welche es erlauben, das Verbindungsteil (30) bezüglich des Fahrzeugchassis (12) um die Schwenkachse (25) herum in eine gewünschte Schwenkstellung zu schwenken.

5. Kippfahrzeug (10) nach Anspruch 3 oder 4, dadurch gekennzeichnet, dass die Schwenkeinrichtung Arretiermittel umfasst, welche es erlauben, das Verbindungsteil (30) in einer gewünschten Schwenkstellung bezüglich des Fahrzeugchassis (12) zu arretieren.

6. Kippfahrzeug nach einem der Ansprüche 3 bis 5, gekennzeichnet durch eine Ausbildung des Verbindungsteils derart, dass es in seiner Längsrichtung wahlweise verlängert und verkürzt werden kann, um durch eine Verstellung der Länge des Verbindungsteils die Kippachse bezüglich der Schwenkachse linear in Längsrichtung des Verbindungsteils verschieben zu können.

7. Kippfahrzeug nach einem der Ansprüche 1 bis 6, dadurch gekennzeichnet, dass die Kippachse wahlweise verschiebbar und in verschiedenen Schiebepositionen arretierbar am Kippbehälter angebracht ist.

8. Kippfahrzeug nach einem der Ansprüche 3 bis 7, dadurch gekennzeichnet, dass die Schwenkachse wahlweise verschiebbar und in verschiedenen Schiebepositionen arretierbar am Fahrzeugchassis angebracht ist.

9. Kippfahrzeug (10) nach einem der Ansprüche 1 bis 8, dadurch gekennzeichnet, dass der Kippbehälter (20) eine für den Transport von Schüttgut geeignete Mulde (20) ist, deren Muldenboden weiter zum Befahren durch einen Lastkraftwagen (60) ausgebildet ist, damit der Lastkraftwagen (60) in der Mulde (20) aufgenommen und durch das Kippfahrzeug (10) transportiert werden kann.

10. Kippfahrzeug (10) nach Anspruch 9, dadurch gekennzeichnet, dass die Mulde (20) mit Mitteln (40, 44) zum wahlweisen Verlängern des Muldenbodens versehen ist.
